# EUROPÄISCHE PATENTANMELDUNG

(11) **EP 4 572 221 A1**
(43) Veröffentlichungstag der Anmeldung: **18.06.2025**
(21) Anmeldenummer: 24212484.0
(22) Anmeldetag: 12.11.2024
(51) Int. Cl.: H04L 7/00, H03L 7/10, H04L 7/10, H04L 27/00

(54) **VORRICHTUNG ZUR SYNCHRONISATION EINES SYMBOLTAKTES BEI EINER DATENÜBERTRAGUNG UND ÜBERTRAGUNGSSYSTEM**

(30) Priorität: 04.12.2023 DE 102023212117
(71) Anmelder: Robert Bosch GmbH, 70442 Stuttgart (DE)
(72) Erfinder: Kaiser, Cornelius, 72108 Rottenburg Am Neckar (DE)

(57) **Zusammenfassung**

Die vorliegende Erfindung betrifft eine Vorrichtung (5) zur Synchronisation eines Symboltaktes bei einer Datenübertragung und ein Übertragungssystem, wobei die Vorrichtung aufweist: eine Schätzkomponente (30) und einen Symbolsynchronisierer (40), wobei die Schätzkomponente (30) eingerichtet ist, ein durch den Sender (10) erzeugtes erstes Signal (S1) zu empfangen, und auf Basis des ersten Signals einen Phasenversatz (POFF) und/oder einen Frequenzversatz (FOFF) zwischen einem Symboltakt des Senders (10), auf dessen Basis das erste Signal (S1) erzeugt wird und einem Symboltakt des Empfängers (S2), auf dessen Basis das erste Signal (S1) im Empfänger (20) ausgewertet wird, zu schätzen, wobei die Vorrichtung (5) eingerichtet ist, den Symbolsynchronisierer (40), welcher als rückwärtsgekoppelter Symbolsynchronisierer (40) ausgebildet ist, auf Basis des geschätzten Phasenversatzes (POFF) und/oder des geschätzten Frequenzversatzes (FOFF) zu initialisieren, und wobei der Symbolsynchronisierer (40) eingerichtet ist, ein durch den Sender (10) erzeugtes zweites Signal (S2) zu empfangen, um auf Basis des zweiten Signals (S2) ein Ausgangssignal (SO) zu erzeugen, welches mit dem Symboltakt des Empfängers (20) synchronisierte Symbole repräsentiert, die innerhalb des zweiten Signals (S2) übertragen werden.

## Beschreibung

### Stand der Technik

Die vorliegende Erfindung betrifft eine Vorrichtung zur Synchronisation eines Symboltaktes bei einer Datenübertragung zwischen einem Sender und einem Empfänger und ein Übertragungssystem mit einer solchen Vorrichtung.

Aus dem Stand der Technik sind Übertragungssysteme bekannt, deren Sender und Empfänger für eine Datenübertragung nicht mittels einer separaten Taktleitung synchronisiert werden, sodass eine Synchronisation eines Symboltakes auf Empfängerseite in Bezug auf einen Symboltakt auf Senderseite anhand von Datenübertragungssignalen selbst erfolgen muss, da die jeweiligen Taktgeber im Sender und im Empfänger unabhängig voneinander arbeiten und dadurch Frequenz- und Phasenverschiebungen zueinander aufweisen können.

Hierfür lassen sich aus dem Stand der Technik bekannte rückwärtsgekoppelte Symbolsynchronisierer (engl. "feedback symbol synchronizer") einsetzen, welche sich im Allgemeinen aus einem Symboltaktfehlerdetektor (engl. "timing error detector"), einem anpassbaren Interpolierer (engl. "adjustable interpolator"), einer Interpolationssteuerung (engl. "interpolation controller") und einem Schleifenfilter (engl. "loop filter") zusammensetzen. Solche rückwärtsgekoppelten Symbolsynchronisierer bieten den Vorteil, dass sie mit einem relativ geringen Aufwand realisierbar sind, d. h., dass sie relativ geringe Hardware- und/oder Software-Ressourcen erfordern. Auf der anderen Seite weisen solche rückwärtsgekoppelten Symbolsynchronisierer aufgrund der vorhandenen Regelschleife i. d. R. lange Einschwingzeiten bis zum Erreichen einer ausreichend genauen Symboltaktsynchronisation auf. Grundsätzlich ist ein geringes Eigenrauschen des rückwärtsgekoppelten Symbolsynchronisierers wünschenswert. Durch die hierfür notwendige kleine Regelungsbandbreite erhöht sich jedoch nachteilig die Einschwingzeit. Die Einschwingzeit und geringes Eigenrauschen stehen in einem Trade-Off und lassen sich nicht auf triviale Weise gleichzeitig verbessern.

Demgegenüber sind vorwärtsgekoppelte Symbolsynchronisierer bekannt, welche aufgrund einer nicht vorhandenen Regelschleife im Vergleich eine schnellere Symboltaktsynchronisation erreichen können. Eine Realisierung solcher vorwärtsgekoppelter Symbolsynchronisierer geht aber i. d. R. mit höheren Ressourcenanforderungen hinsichtlich einer Hardware und/oder einer Software einher.

Rice, Michael. "Digital Communications: A Discrete-Time Approach", Upper Saddle River, NJ: Prentice Hall, 2008, offenbart u. a. einen rückwärtsgekoppelten Symbolsynchronsierer.

### Offenbarung der Erfindung

Gemäß einem ersten Aspekt der vorliegenden Erfindung wird eine Vorrichtung zur Synchronisation eines Symboltaktes bei einer Datenübertragung zwischen einem Sender und einem Empfänger vorgeschlagen.

Es sei darauf hingewiesen, dass die vorliegende Erfindung insbesondere auf eine Symboltaktsynchronisierung zwischen Sendern und Empfängern abzielt, welche nicht durch eine separate Taktleitung, sondern nur auf Basis übertragener Datensignale miteinander synchronisiert werden.

Die Vorrichtung weist eine Schätzkomponente und einen Symbolsynchronisierer auf, welche jeweils aus einer Vielzahl logischer und/oder physischer Untereinheiten ausgebildet sein können. Zudem ist es möglich, dass die Schätzkomponente und/oder der Symbolsynchronisierer und/oder jeweilige Untereinheiten davon vollständig als Software-Implementierung und/oder vollständig als Hardware-Implementierung und/oder als eine Kombination aus Software- und Hardware-Implementierungen ausgebildet sein können.

Eine jeweilige Implementierung lässt sich u. a. auf Basis einer oder mehrerer Recheneinheiten umsetzen, welche beispielsweise als ASIC, FPGA, Prozessor, digitaler Signalprozessor, Mikrocontroller, o. ä., ausgestaltet sein können.

Die Schätzkomponente ist erfindungsgemäß eingerichtet, ein durch den Sender erzeugtes erstes Signal zu empfangen (z. B. eine zur Symboltaktsynchronisation vorgesehene vordefinierte Datenpräambel oder ein hiervon abweichendes Signal) und auf Basis des ersten Signals einen Phasenversatz (engl. "phase offset") und/oder einen Frequenzversatz (engl. "frequency offset") zwischen einem Symboltakt des Senders, auf dessen Basis das erste Signal erzeugt wird und einem Symboltakt des Empfängers, auf dessen Basis das erste Signal im Empfänger ausgewertet wird, zu schätzen.

Die Vorrichtung ist eingerichtet, den Symbolsynchronisierer, welcher als rückwärtsgekoppelter Symbolsynchronisierer ausgebildet ist, auf Basis des geschätzten Phasenversatzes und/oder des geschätzten Frequenzversatzes zu initialisieren. Der Symbolsynchronisierer ist beispielsweise ein aus dem Stand der Technik bekannter rückwärtsgekoppelter Symbolsynchronisierer, welcher darüber hinaus eingerichtet ist, mittels der ermittelten Schätzwerte für den Phasenversatz und/oder den Frequenzversatz über geeignete Schnittstellen initialisiert zu werden.

Hierbei ist es möglich, dass der Symbolsynchronisierer und die Schätzkomponente das erste Signal parallel empfangen, da der Symbolsynchronisierer durch die Initialisierung nach Abschluss der Schätzung des Frequenzversatzes und/oder des Phasenversatzes erneut in einen definierten Zustand versetzt wird. Ggf. kann es während der Initialisierung in diesem Fall von Vorteil sein, sämtliche Speicher- und/oder Zustandsvariablen des Symbolsynchronisierers ebenfalls in eine Grundinitialisierung zurückzusetzen. Alternativ ist es auch möglich, dass dem Symbolsynchronisierer erst dann Sendesignale (insbesondere Nutzsignale) des Senders zugeführt werden, wenn die Initialisierung durch die Schätzkomponente abgeschlossen ist. Hierfür kann ein entsprechender logischer und/oder physischer Schalter am Eingang des Symbolsynchronisierers vorgesehen sein.

Es sei darauf hingewiesen, dass in einem Fall, in dem die Schätzkomponente ausgebildet ist, sowohl eine Schätzung des Phasenversatzes als auch des Frequenzversatzes durchzuführen, eine erste Untereinheit der Schätzkomponente, welche zur Schätzung des Phasenversatzes vorgesehen ist und eine zweite Untereinheit der Schätzkomponente, welche zur Schätzung des Frequenzversatzes vorgesehen ist, zu unterschiedlichen Zeitpunkten Schätzwerte für den Phasenversatz und für den Frequenzversatz ermitteln können und dass eine Initialisierung des Symbolsynchronisierers nicht zwangsläufig erst dann erfolgen muss, wenn beide Schätzwerte vorliegen. Stattdessen ist es auch möglich, die Initialisierung zu unterschiedlichen Zeitpunkten und beispielweise dann auszuführen, sobald die jeweiligen Schätzwerte vorliegen.

Es sei weiter darauf hingewiesen, dass es vorteilhaft ist, wenn Verarbeitungsvorgänge innerhalb jeweiliger Signalverarbeitungsketten der Untereinheiten, welche für beide Untereinheiten identisch sind, nur einmal für beide Untereinheiten durchgeführt werden, indem die jeweiligen Ergebnisse der Verarbeitungsvorgänge beiden Untereinheiten bereitgestellt werden (unabhängig davon, ob diese in der ersten Untereinheit, in der zweiten Untereinheit oder in einer hiervon abweichenden Komponente berechnet werden), um erforderliche Rechen- und/oder Speicherressourcen für die Vorrichtung einzusparen.

Ferner ist es möglich, dass die Vorrichtung und insbesondere die Schätzkomponente einen gemeinsamen Schätzwertselektor für die erste Untereinheit und die zweite Untereinheit und/oder separate Schätzwertselektoren für die erste Untereinheit und die zweite Untereinheit aufweist, welche eingerichtet sind, einen jeweils geeigneten Schätzwert für den Phasenversatz und/oder den Frequenzversatz aus einer Vielzahl erzeugter Schätzwerte über die Zeit zu selektieren, welche anschließend für die Initialisierung des Symbolsynchronisierers verwendet werden.

Der Symbolsynchronisierer ist eingerichtet, ein durch den Sender erzeugtes zweites Signal zu empfangen, um auf Basis des zweiten Signals ein Ausgangssignal zu erzeugen, welches mit dem Symboltakt des Empfängers synchronisierte Symbole repräsentiert, die innerhalb des zweiten Signals übertragen werden. Mit anderen Worten ist das zweite Signal für eine eigentliche Nutzdatenübertragung zwischen dem Sender und dem Empfänger vorgesehen, während das erste Signal bevorzugt ausschließlich für das Ermitteln des Phasen- und/oder Frequenzversatzes, d. h., für die Symboltaktsynchronisation vorgesehen ist. Dies schließt aber explizit nicht aus, dass auch das erste Signal Nutzinformationen enthalten kann.

Nach erfolgter erfindungsgemäßer Initialisierung des Symbolsynchronisierers ist es möglich, eine Vielzahl weiterer Nutzsignale (z. B. ein drittes Signal, ein viertes Signal, usw.) in analoger Weise zu dem Empfang des zweiten Signals zu empfangen, um beispielsweise größere Datenmengen von dem Sender an den Empfänger zu übertragen. Darüber hinaus ist es möglich, vor jedem Nutzsignal (welches sich auch aus einer Vielzahl segmentierter Einzelsignale zusammensetzen kann) und/oder in Abhängigkeit vordefinierter Synchronisationsintervalle und/oder in Abhängigkeit vordefinierter Kriterien ein jeweiliges erstes Signal von dem Sender an den Empfänger zu übertragen, um eine erneute Symboltaktsynchronisation durchzuführen.

Dies kann beispielsweise von Vorteil sein, wenn eine längere Unterbrechung einer Übertragung von Nutzsignalen vorliegt, durch welche die Synchronisation zwischen dem Sender und dem Empfänger ggf. auseinanderdriften kann. Auch in einem Fall, in dem der Empfänger eingerichtet ist, Nutzsignale von unterschiedlichen Sendern zu empfangen, kann bei einem Wechsel der Datenübertragung von einem Sender zu einem nächsten Sender eine erneute Synchronisation mittels eines vorgelagerten Sendens des ersten Signals durch den jeweiligen Sender vorteilhaft oder notwendig sein.

Zusammenfassend bietet die erfindungsgemäße Vorrichtung den besonderen Vorteil, dass eine Einschwingphase des rückwärtsgekoppelten Symbolsynchronisierers durch die Initialisierung mittels des Schätzkomponente für den Phasenversatz und/oder für den Frequenzversatz im Vergleich zu einem herkömmlichen Symbolsynchronisierer deutlich verkürzt werden kann, wodurch ein verlustfreier Empfang von durch den Sender übertragenen Nutzsignalen entsprechend früher stattfinden kann als im Stand der Technik. Hierdurch lassen sich u. a. Antwortzeiten/Reaktionszeiten in einem System mit einer solchen Vorrichtung reduzieren, eine Zuverlässigkeit einer Datenübertragung, usw. erreichen.

Die Unteransprüche zeigen bevorzugte Weiterbildungen der Erfindung.

In einer vorteilhaften Ausgestaltung der vorliegenden Erfindung ist die Schätzkomponente als vorwärtsgekoppelte Schätzkomponente ausgebildet, da auf diese Weise eine besonders ressourcenschonende und/oder schnelle Schätzung des Phasenversatzes und/oder des Frequenzversatzes ermöglicht wird. Insbesondere in dem Fall einer Verwendung einer vorwärtsgekoppelten Schätzkomponente ist es möglich, dass eine Verarbeitungsdauer zum Schätzen des Phasenversatzes und/oder des Frequenzversatzes kürzer ist als eine Einschwingzeit des Symbolsynchronisierers bis zum Erreichen eines synchronisierten Symboltaktes zwischen dem Sender und dem Empfänger in einem Fall, in dem der Symbolsynchronisierer nicht mittels der Schätzkomponente initialisiert wird. Dies schließt explizit nicht aus, dass auch auf Basis einer rückwärtsgekoppelt ausgebildeten Schätzkomponente eine Einschwingzeit im Vergleich zu einem nicht erfindungsgemäß initialisierten Symbolsynchronisierer erreichbar sein kann.

Besonders bevorzugt ist das erste Signal ein vordefiniertes Synchronisationssignal, welches beispielsweise auch als Präambel oder Trainingssignal bezeichnet werden kann. Auf diese Weise lässt sich das erste Signal hinsichtlich einer Symbolabfolge und/oder einer enthaltenen Anzahl von Symbolen vorteilhaft an Eigenschaften einer jeweiligen Implementierung der Schätzkomponente anpassen. Indem das vordefinierte erste Signal der Vorrichtung bekannt ist, lässt sich zudem ein hierauf angepasstes Ermitteln des geeigneten Auswahlzeitpunktes für jeweilige Schätzwerte eines ggf. vorhandenen Schätzwertselektors realisieren. Dies schließt explizit nicht aus, dass die Schätzkomponente auch auf Basis eines nicht vordefinierten ersten Signals (z. B. auf Basis eines Zufallsdatensignals und/oder eines Nutzsignals) eine vorteilhafte Schätzung des Phasen- und/oder des Frequenzversatzes erzielen kann. Weiter bevorzugt ist eine Symbolrate des ersten Signals gleich oder kleiner als eine für die Übertragung des ersten Signals und des zweiten Signals vorgesehene Trägerfrequenz.

In einer weiteren vorteilhaften Ausgestaltung der vorliegenden Erfindung ist die Schätzkomponente eingerichtet, den Phasenversatz zu schätzen, indem das erste Signal repräsentierende Abtastwerte (welche vorzugsweise durch einen A/D-Wandler der Vorrichtung und/oder des Empfängers aus dem ersten Signal erzeugt werden) mittels einer vorzugsweise aus dem Stand der Technik bekannten IQ-Demodulation, deren Referenzfrequenz mit dem Symboltakt des Empfängers und insbesondere mit der beschriebenen Trägerfrequenz korrespondiert, in komplexe Abtastwerte umgewandelt werden, indem zu jedem der komplexen Abtastwerte ein jeweils korrespondierender Phasenversatzwert ermittelt wird und indem aus den jeweiligen ermittelten Phasenversatzwerten mit den Phasenversatzwerten korrespondierende zeitliche Verschiebungswerte zwischen dem Symboltakt des Senders und dem Symboltakt des Empfängers ermittelt werden. Diese zeitlichen Verschiebungswerte lassen sich anschließend in dem Symbolsynchronisierer einsetzen, um beispielsweise auf geeignete neue Abtastzeitpunkte (vorzugsweise auf Subsample-Ebene) für das erste Signal in dem Interpolierer festzulegen. Es sei in diesem Zusammenhang darauf hingewiesen, dass eine Abtastrate der Abtastwerte in Bezug auf die Symbolrate vorteilhaft eine Überabtastung repräsentieren kann, wobei die Abtastrate während oder am Ende der Verarbeitungskette der Schätzkomponente und/oder des Symbolsynchronisierers weiter vorteilhaft zu einer Zielabtastrate konvertiert (insbesondere dezimiert) werden kann. Der Phasenversatz wird beispielsweise auf Basis einer Arkustangensberechnung ermittelt, welche auf die komplexen Abtastwerte angewendet wird. Darüber hinaus ist es in Abhängigkeit einer jeweiligen konkreten Implementierung der Schätzung des Phasenversatzes möglich, dass weitere Signalverarbeitungsschritte vorgesehen sein können, um beispielsweise geeignete Skalierungen und/oder Wertebereichsverschiebungen von Ergebnissen innerhalb der Verarbeitungskette auszuführen.

Alternativ oder zusätzlich ist die Schätzkomponente vorteilhaft eingerichtet, den Frequenzversatz zu schätzen, indem das erste Signal repräsentierende Abtastwerte mittels einer IQ-Demodulation, deren Referenzfrequenz mit dem Symboltakt des Empfängers korrespondiert, in komplexe Abtastwerte umgewandelt werden, indem zu jedem der komplexen Abtastwerte ein jeweils korrespondierender Phasenversatzwert ermittelt wird, indem überlaufbedingte Sprünge (d. h., bei einer Überschreitung eines vorgesehenen Wertebereichs für die Phasenversatzwerte, welcher beispielsweise von -π bis +π reicht) zwischen aufeinanderfolgenden Phasenversatzwerten vermieden werden (engl. "unwrapping"), indem die Phasenversatzwerte in einen kontinuierlich fortgesetzten Verlauf von Phasenversatzwerten umgerechnet werden und indem Änderungen zwischen aufeinanderfolgenden umgerechneten Phasenversatzwerten berechnet werden, welche einen jeweiligen Frequenzversatz repräsentieren. Bezüglich der Abtastrate und einer ggf. vorhandenen Überabtastung sei auf vorstehende Beschreibung zum Ermitteln des Phasenversatzes verwiesen, welche diesbezüglich auch beim Ermitteln des Frequenzversatzes Gültigkeit hat. Ebenso wird bezüglich der möglichen Berechnung des Phasenversatzes und ggf. weiterer Verarbeitungsschritte auf vorstehende Beschreibung zum Ermitteln des Phasenversatzes verwiesen.

In einer weiteren vorteilhaften Ausgestaltung der vorliegenden Erfindung ist die Vorrichtung eingerichtet in Abhängigkeit eines Empfangszeitpunktes des ersten Signals und/oder einer Dauer des ersten Signals und/oder einer Verarbeitungsdauer für die Schätzung des Phasenversatzes und/oder des Frequenzversatzes und/oder einer Anforderung an eine Mindestgenauigkeit für den geschätzten Phasenversatz und/oder Frequenzversatz einen Zeitpunkt zu ermitteln, zu dem ein aktuell in der Schätzkomponente ermittelter Schätzwert für den Phasenversatz und/oder den Frequenzversatz für eine Initialisierung des Symbolsynchronisierers ausgewählt wird. Hierfür lässt sich beispielsweise der oben beschriebene Schätzwertselektor einsetzen.

Besonders bevorzugt weist die Schätzkomponente zusätzlich wenigstens ein Filter, insbesondere ein Tiefpassfilter auf, welches eingerichtet ist, ein im ersten Signal enthaltenes Rauschen zu reduzieren. Ein solches Filter kann beispielsweise nach einer jeweiligen IQ-Demodulation in der ersten Untereinheit und/oder in der zweiten Untereinheit der Schätzkomponente und vor dem Berechnen einer jeweiligen Phaseninformation aus den komplexen Abtastwerten erfolgen. Ein solches Filter lässt sich beispielweise als Filter mit gleitendem Mittelwert ausbilden, welches vorteilhaft eine Mittelwertbildung über eine vordefinierte Anzahl von Abtastwerten berechnet, die gleich oder kleiner ist als eine Anzahl von Abtastwerten, welche das gesamte erste Signal repräsentieren. Alternativ oder zusätzlich ist es möglich, in der Verarbeitungskette zum Schätzen des Frequenzversatzes eine Filterung unmittelbar vor der Berechnung von Änderungen zwischen aufeinanderfolgenden umgerechneten Phasenversatzwerten vorzusehen. Weiter alternativ oder zusätzlich ist es möglich eine Filterung an weiteren Stellen innerhalb der jeweiligen Verarbeitungsketten zum Schätzen des Phasenversatzes und/oder des Frequenzversatzes vorzusehen und/oder eine von einer Filterung mit gleitender Mittelwertbildung abweichende Filterung einzusetzen.

Gemäß einem zweiten Aspekt der vorliegenden Erfindung wird ein Übertragungssystem aufweisend einen Sender und einen Empfänger vorgeschlagen, wobei der Empfänger eine Vorrichtung gemäß dem ersten Erfindungsaspekt umfasst. Der Sender ist eingerichtet, das erste Signal und das zweite Signal (und vorzugsweise weitere Nutzdaten enthaltende Signale) auf Basis eines Symboltakes des Senders zu erzeugen und die Signale an den Empfänger zu übertragen. Der Empfänger ist eingerichtet, auf Basis des ersten Signals und des zweiten Signals Daten repräsentierende Symbole von dem Sender zu empfangen. Die Merkmale, Merkmalskombinationen sowie die sich aus diesen ergebenden Vorteile entsprechen den in Verbindung mit dem erstgenannten Erfindungsaspekt ausgeführten derart ersichtlich, dass zur Vermeidung von Wiederholungen auf die obigen Ausführungen verwiesen wird.

In einer vorteilhaften Ausgestaltung des erfindungsgemäßen Übertragungssystems weist das Übertragungssystem wenigstens zwei Sender auf, welche jeweils eingerichtet sind, zumindest das erste Signal und jeweilige zweite Signale zu erzeugen und diese in nicht kollidierender Weise (z. B. mittels eines Zeitmultiplexverfahrens oder mittels eines hiervon abweichenden Multiplexverfahrens) an den Empfänger zu übertragen, während der Empfänger eingerichtet ist, auf Basis der jeweiligen ersten Signale und zweiten Signale Daten repräsentierende Symbole von den jeweiligen Sendern zu empfangen.

Das erfindungsgemäße Übertragungssystem ist beispielsweise ein Ultraschallsystem und/oder ein Radarsystem, und/oder ein Fahrzeugsystem und/oder ein Powerline-Übertragungssystem und/oder ein Basisbandübertragungssystem und/oder ein hiervon abweichendes Übertragungssystem. In dem Fall, in dem das Übertragungssystem beispielsweise ein Ultraschallsystem eines Fahrzeugs ist, ist es möglich, dass eine Vielzahl am Fahrzeug angeordneter Ultraschallsensoren (welche z. B. im Frontbereich und/oder im Heckbereich des Fahrzeugs angeordnet sind), welche hier im Sinne der vorliegenden Erfindung als Sender fungieren, informationstechnisch über eine Vernetzung mit einem zentralen Steuergerät verbunden sind, welches im Sinne der vorliegenden Erfindung als Empfänger fungiert. Dies schließt nicht aus, dass auch eine bidirektionale Kommunikation zwischen den Ultraschallsensoren und dem zentralen Steuergerät vorgesehen sein kann. In einem solchen Fall können sämtliche Teilnehmer des Übertragungssystems vorteilhaft über eine erfindungsgemäße Vorrichtung verfügen. In Verbindung mit solchen Ultraschallsystemen ist es bekannt, dass die jeweiligen Ultraschallsensoren per Zeitmultiplexverfahren nacheinander Daten an das zentrale Steuergerät übertragen. Da die einzelnen Ultraschallsensoren i. d. R. über keine gemeinsame Taktbasis verfügen, lässt sich die erfindungsgemäße Vorrichtung besonders vorteilhaft für eine solche Datenkommunikation in einem solchen Ultraschallsystem einsetzen, da erfindungsgemäß eine besonders schnelle Anpassung im Empfänger an den jeweiligen Symboltakt der Sender erfolgen kann, wodurch u. a. kurze Reaktionszeiten bei einer Umfelderfassung auf Basis des Ultraschallsystems ermöglicht werden.

### Kurze Beschreibung der Zeichnungen

Nachfolgend werden Ausführungsbeispiele der Erfindung unter Bezugnahme auf die begleitenden Zeichnungen im Detail beschrieben. In der Zeichnung ist:
- Figur 1: ein Blockschaltbild eines Ausführungsbeispiels eines erfindungsgemäßen Übertragungssystems mit einer erfindungsgemäßen Vorrichtung;
- Figur 2: ein Blockschaltbild eines Ausführungsbeispiels einer erfindungsgemäßen Schätzkomponente zum Schätzen eines Phasenversatzes;
- Figur 3: ein Blockschaltbild eines Ausführungsbeispiels einer erfindungsgemäßen Schätzkomponente zum Schätzen eines Frequenzversatzes; und
- Figur 4: ein Blockschaltbild eines Ausführungsbeispiels eines erfindungsgemäßen Abtastwertselektors.

### Ausführungsformen der Erfindung

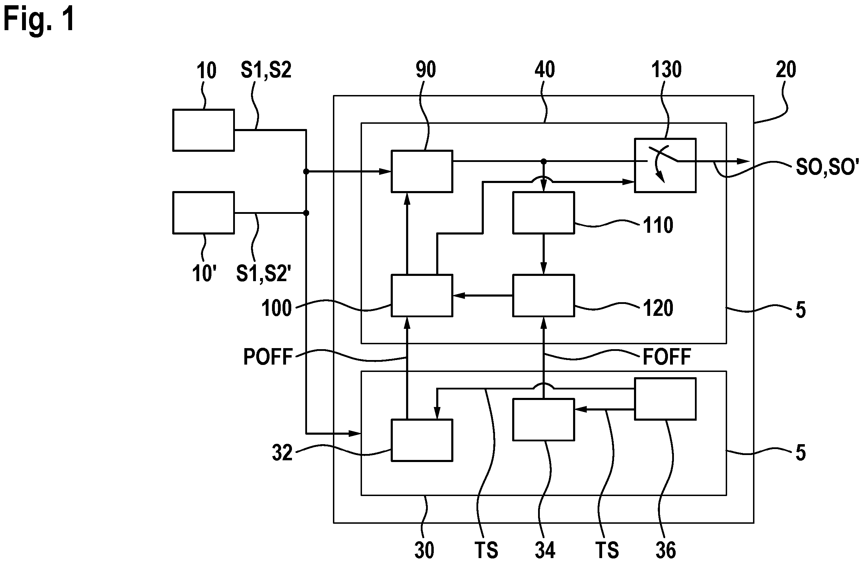

Figur 1 zeigt ein Blockschaltbild eines Ausführungsbeispiels eines erfindungsgemäßen Übertragungssystems mit einer erfindungsgemäßen Vorrichtung 5, wobei die Vorrichtung 5 durch eine Recheneinheit repräsentiert ist, welche die nachfolgend beschriebenen funktionalen Blöcke der Vorrichtung 5 auf Basis eines Computerprogramms realisiert, welches durch die Recheneinheit ausgeführt wird.

Die Vorrichtung 5 ist zur Synchronisation eines Symboltaktes bei einer Datenübertragung zwischen einem ersten Sender 10, einem zweiten Sender 10` und einem Empfänger 20 vorgesehen, wobei die Vorrichtung 5 in dem Empfänger 20 angeordnet ist. Die Sender 10, 10', welche hier jeweils Ultraschallsensoren eines Umfelderfassungssystems eines Fahrzeugs sind, sind jeweils drahtgebunden mit dem Empfänger 20 verbunden, welcher ein zentrales Steuergerät des Fahrzeugs für einen Empfang und eine Auswertung von Umfeldinformationen ist, welche durch die Ultraschallsensoren erfasst werden.

Es sei darauf hingewiesen, dass weitere Komponenten des Empfängers 20, welche zum Beispiel für eine Vor- und/oder Weiterverarbeitung empfangener Daten vorgesehen sind, welche mittels der Datenübertragung zwischen den Sendern 10, 10' und dem Empfänger 20 übertragen werden, hier aus Gründen der Übersicht nicht gezeigt und nicht beschrieben sind.

Die Vorrichtung 5 weist eine Schätzkomponente 30 und einen Symbolsynchronisierer 40 auf, wobei die Schätzkomponente 30 eingerichtet ist, ein durch die Sender 10, 10' jeweils zeitlich nicht überlappend erzeugtes erstes Signal S1 zu empfangen und auf Basis des ersten Signals S1 einen Phasenversatz POFF und einen Frequenzversatz FOFF zwischen einem jeweiligen Symboltakt der Sender 10, 10', auf deren Basis das jeweilige erste Signal S1 erzeugt wird und einem Symboltakt des Empfängers 20, auf dessen Basis das erste Signal S1 im Empfänger 20 ausgewertet wird, zu schätzen. Das erste Signal S1 ist hier als vordefinierte Präambel ausgebildet, deren Symbolrate gleich oder kleiner als eine für die Übertragung des ersten Signals S1 vorgesehene Trägerfrequenz ist.

Hierfür weist die Schätzkomponente 30 eine erste Untereinheit 32, welche eingerichtet ist, den Phasenversatz POFF zu ermitteln und eine zweite Untereinheit 34 auf, welche eingerichtet ist, den Frequenzversatz FOFF zu ermitteln. Zudem weist die Schätzkomponente 30 einen Schätzwertselektor 36 auf, welcher eingerichtet ist, einen Zeitpunkt TS zu ermitteln, zu dem ein aktuell vorliegender Schätzwert für den Phasenversatz POFF und für den Frequenzversatz FOFF in den Untereinheiten 32, 34 für eine Initialisierung des Symbolsynchronisierers 40 geeignet ist.

Die Vorrichtung 5 ist weiter eingerichtet ist, den Symbolsynchronisierer 40, welcher hier als herkömmlicher rückwärtsgekoppelter Symbolsynchronisierer 40 ausgebildet ist, auf Basis des geschätzten Phasenversatzes POFF und des geschätzten Frequenzversatzes FOFF zu initialisieren.

Der Symbolsynchronisierer 40 ist eingerichtet, ein durch den ersten Sender 10 erzeugtes zweites Signal S2 und ein durch den zweiten Sender 10` erzeugtes zweites Signal S2' zu empfangen, um auf Basis der zweiten Signale S2, S2` jeweilige Ausgangssignale SO, SO' zu erzeugen, welche mit dem Symboltakt des Empfängers 20 synchronisierte Symbole repräsentiert, die innerhalb der zweiten Signale S2, S2' übertragen werden.

Es sei darauf hingewiesen, dass ein A/D-Wandler (und ggf. weitere Vorverarbeitungseinheiten) der Vorrichtung 5, welcher die von den Sendern 10, 10' analog übertragenen Signale S1, S2, S2' für eine weitere Verarbeitung innerhalb der Vorrichtung 5 in digitale Signale S1, S2, S2' wandelt, hier aus Gründen der Übersicht nicht gezeigt ist. Vorzugsweise ist ein solcher A/D-Wandler derart angebunden, dass er sowohl dem Symbolsynchronisierer 40 als auch der Schätzkomponente 30 die gewandelten Signale S1, S2, S2' bereitstellt.

Der Symbolsynchronisierer 40 weist folgende Komponenten auf: einen anpassbaren Interpolierer 90, in welchen die Signale S1, S2, S2' der Sender 10, 10' eingespeist werden, einen Abtastwertselektor 130, durch welchen aus einer Vielzahl von Abtastwerten pro übertragenem Symbol (d. h., es liegt hier eine Überabtastung der einzelnen Symbole vor) der jeweils am besten geeignete Abtastwert zur Repräsentation eines jeweiligen Symbols ausgewählt wird. Die Auswahl erfolgt vorzugsweise derart, dass jeweils derjenige Abtastwert pro Symbol ausgewählt wird, welcher den höchsten Signal-Rauschabstand bezüglich der Symbolamplitude aufweist.

Der Symbolsynchronisierer 40 weist ferner einen Symboltaktfehlerdetektor 110 auf, welcher auf Basis eines aus dem Stand der Technik bekannten Algorithmus eingerichtet ist, eine Symboltaktabweichung zwischen den jeweiligen Symboltakten der Sender 10, 10' und dem Symboltakt des Empfängers 20 zu berechnen.

Der Symbolsynchronisierer 40 weist darüber hinaus ein Schleifenfilter 120 auf, welches auf Basis eines PI-Reglers realisiert ist und erfindungsgemäß eingerichtet ist, mittels des Frequenzversatzwertes FOFF initialisiert zu werden.

Schließlich weist der Symbolsynchronisierer 40 eine Interpolationssteuerung 100 auf, welche eingerichtet ist, erfindungsgemäß mittels des Phasenversatzwertes, bzw. mittels eines mit dem Phasenversatzwert korrespondierenden zeitlichen Versatzwertes POFF initialisiert zu werden und eine aus dem Stand der Technik bekannte Ansteuerung des Interpolierers 90 und des Abtastwertselektors 130 auszuführen.

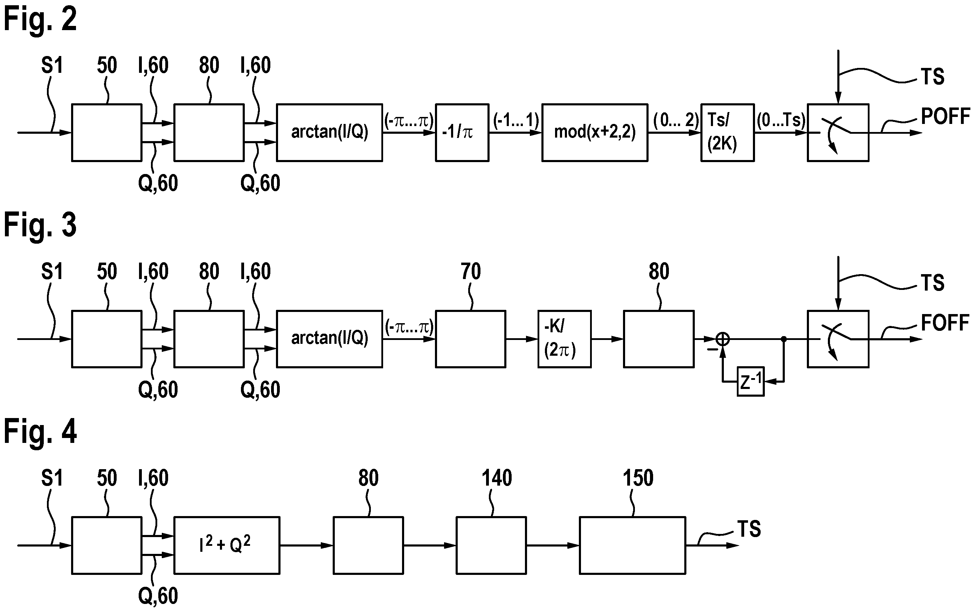

Figur 2 zeigt ein Blockschaltbild eines Ausführungsbeispiels einer erfindungsgemäßen Schätzkomponente 30 zum Schätzen eines Phasenversatzes POFF, wobei dieser Teil der Schätzkomponente 30 die in Figur 1 beschriebene erste Untereinheit 32 der Schätzkomponente 30 repräsentiert.

Das wie in Figur 1 beschriebene erste Signal S1, welches ein überabgetastetes diskretes Signal ist, wird in eine aus dem Stand der Technik bekannte Komponente zur IQ-Demodulation 50 eingespeist, deren Referenzfrequenz mit dem Symboltakt des Empfängers 20 korrespondiert, um die das erste Signal S1 repräsentierende realen Abtastwerte in komplexe Abtastwerte 60 umzuwandeln, welche jeweils durch I-Daten I und Q-Daten Q repräsentiert werden.

Die komplexen Abtastwerte 60 werden anschließend einem Tiefpassfilter 80 zugeführt, welches als gleitendes Mittelwertfilter realisiert ist, um unerwünschte Rauschanteile, welche in den komplexen Abtastwerten 60 enthalten sind, zu reduzieren.

Anschließend werden auf Basis einer Arkustangens-Berechnung (arctan(I/Q)) aus den komplexen Abtastwerten 60 jeweilige Phasenversatzwerte POFF ermittelt, welche zunächst durch einen Wertebereich von -π bis +π repräsentiert werden.

Im Anschluss werden die Phasenversatzwerte POFF mit einem Faktor von -1/π skaliert, um die Phasenversatzwerte POFF in einen Wertebereich von -1 bis +1 zu überführen.

Durch eine nachfolgende Moduloberechnung mod(x+2,2) werden die jeweiligen skalierten Phasenversatzwerte POFF in einen Wertebereich von 0 bis +2 verschoben, wobei x den jeweiligen skalierten Phasenversatzwert POFF repräsentiert.

Anschließend an die Moduloberechnung werden die Phasenversatzwerte POFF mittels eines Faktors Ts/(2K) auf einen Wertebereich zwischen 0 und Ts skaliert, wobei K der Anzahl von Abtastwerten pro Symbol entspricht und Ts dem Symbolzeitintervall entspricht.

Schließlich wird aus einer Vielzahl zeitlich aufeinanderfolgend ermittelter Phasenversatzwerte POFF ein für die Initialisierung des Symbolsynchronisierers 40 geeigneter Phasenversatzwert POFF ausgewählt. Diese Auswahl erfolgt auf Basis des in Figur 1 beschriebenen Zeitpunktes TS, welcher durch den ebenfalls in Figur 1 und nachfolgend in Figur 4 beschriebenen Schätzwertselektor 36 ermittelt wird.

Figur 3 zeigt ein Blockschaltbild eines Ausführungsbeispiels einer erfindungsgemäßen Schätzkomponente 30 zum Schätzen eines Frequenzversatzes FOFF, wobei dieser Teil der Schätzkomponente 30 die in Figur 1 beschriebene zweite Untereinheit 34 der Schätzkomponente 30 repräsentiert.

Das wie in Figur 1 beschriebene erste Signal S1, welches ein überabgetastetes diskretes Signal ist, wird in eine aus dem Stand der Technik bekannte Komponente zur IQ-Demodulation 50 eingespeist, deren Referenzfrequenz mit dem Symboltakt des Empfängers 20 korrespondiert, um die das erste Signal S1 repräsentierende reale Abtastwerte in komplexe Abtastwerte 60 umzuwandeln, welche jeweils durch I-Daten I und Q-Daten Q repräsentiert werden.

Die komplexen Abtastwerte 60 werden anschließend einem Tiefpassfilter 80 zugeführt, welches als gleitendes Mittelwertfilter realisiert ist, um unerwünschte Rauschanteile, welche in den komplexen Abtastwerten 60 enthalten sind, zu reduzieren.

Anschließend werden auf Basis einer Arkustangens-Berechnung (arctan(I/Q)) aus den komplexen Abtastwerten 60 jeweilige Phasenversatzwerte POFF ermittelt, welche durch einen Wertebereich von -π bis +π repräsentiert werden.

Im nachfolgenden Unwrapper 70 werden überlaufbedingte Sprünge zwischen aufeinanderfolgenden Phasenversatzwerten POFF an den Wertebereichsgrenzen dadurch vermieden, dass die Phasenversatzwerte POFF in einen kontinuierlich fortgesetzten Verlauf von Phasenversatzwerten POFF innerhalb eines entsprechend vergrößerten Wertebereichs umgerechnet werden.

Im Anschluss daran erfolgt eine Skalierung der umgerechneten Phasenversatzwerte POFF mittels eines Faktors -K/2π, wobei K der Anzahl von Abtastwerten pro Symbol entspricht.

Für eine weitere Rauschreduzierung ist in der Verarbeitungskette von Figur 3 nachfolgend eine weitere Filterung 80 vorgesehen, welche beispielsweise identisch zu der Filterung im vorangegangenen Filter 80 des Blockschaltbildes oder hiervon abweichend umgesetzt sein kann.

Im darauffolgenden Verarbeitungsschritt in der Verarbeitungskette erfolgt eine Differenzierung der wie vorstehend verarbeiteten Abtastwerte, indem jeweils aufeinanderfolgende Abtastwerte voneinander subtrahiert werden. Hierfür ist das Verzögerungsglied z-1 mit negativer Rückkopplung vorgesehen, durch welches ein jeweils vorangegangenen Abtastwert von einem jeweils aktuell verarbeiteten Abtastwert subtrahiert wird. Die solchermaßen ermittelten Änderungen zwischen aufeinanderfolgenden umgerechneten Phasenversatzwerten POFF repräsentieren einen jeweiligen Frequenzversatz FOFF.

Schließlich wird aus einer Vielzahl zeitlich aufeinanderfolgend ermittelter Frequenzversatzwerte FOFF ein für die Initialisierung des Symbolsynchronisierers geeigneter Frequenzversatzwert FOFF ausgewählt. Diese Auswahl erfolgt auf Basis des in Figur 1 beschriebenen Zeitpunktes TS, welcher durch den ebenfalls in Figur 1 und nachfolgend in Figur 4 beschriebenen Schätzwertselektor 36 ermittelt wird.

Figur 4 zeigt ein Blockschaltbild eines Ausführungsbeispiels eines erfindungsgemäßen Abtastwertselektors 130, welcher hier ein Abtastwertselektor 130 gemäß den vorstehend beschriebenen Figuren 1 bis 3 ist.

Das wie in Figur 1 beschriebene erste Signal S1, welches ein überabgetastetes diskretes Signal ist, wird in eine aus dem Stand der Technik bekannte Komponente zur IQ-Demodulation 50 eingespeist, deren Referenzfrequenz mit dem Symboltakt des Empfängers 20 korrespondiert, um die das erste Signal S1 repräsentierende reale Abtastwerte in komplexe Abtastwerte 60 umzuwandeln, welche jeweils durch I-Daten I und Q-Daten Q repräsentiert werden.

Im anschließenden Block des Blockschaltbildes in Fig. 4 wird das Betragsquadrat der jeweiligen komplexen Abtastwerte 60 ermittelt.

Die Betragsquadratwerte werden anschließend einem Tiefpassfilter 80 zugeführt, welches als gleitendes Mittelwertfilter realisiert ist, um unerwünschte Rauschanteile, welche in den Betragsquadratwerten enthalten sind, zu reduzieren.

Jeweilige Ausgangswerte aus dem Tiefpassfilter 80 werden in einem Block für einen Schwellenwertabgleich 140 mit einem vordefinierten Schwellenwert abgeglichen, wobei der Schwellenwert derart festgelegt ist, dass eine Überschreitung des Schwellenwertes einen jeweiligen Beginn des ersten Signals S1 kennzeichnet.

Mittels einer nachfolgend angeordneten Verzögerungseinheit 150 wird Ausgehend von dem Zeitpunkt des Beginns des ersten Signals S1 der in den vorstehenden Figuren beschriebene Zeitpunkt TS ermittelt, indem auf den Zeitpunkt des Beginns des ersten Signals S1 eine Verzögerungszeit hinzuaddiert wird, welche in Abhängigkeit einer Verarbeitungsdauer der Schätzkomponente 30 (siehe Figur 1, 2, und 3) und in Abhängigkeit einer Dauer des ersten Signals S1 festgelegt ist.

## Patentansprüche

1. Vorrichtung (5) zur Synchronisation eines Symboltaktes bei einer Datenübertragung zwischen einem Sender (10) und einem Empfänger (20) aufweisend:
- eine Schätzkomponente (30), und
- einen Symbolsynchronisierer (40),
wobei
- die Schätzkomponente (30) eingerichtet ist,
- ein durch den Sender (10) erzeugtes erstes Signal (S1) zu empfangen, und
- auf Basis des ersten Signals einen Phasenversatz (POFF) und/oder einen Frequenzversatz (FOFF) zwischen einem Symboltakt des Senders (10), auf dessen Basis das erste Signal (S1) erzeugt wird und einem Symboltakt des Empfängers (20), auf dessen Basis das erste Signal (S1) im Empfänger (20) ausgewertet wird, zu schätzen,
- die Vorrichtung (5) eingerichtet ist, den Symbolsynchronisierer (40), welcher als rückwärtsgekoppelter Symbolsynchronisierer (40) ausgebildet ist, auf Basis des geschätzten Phasenversatzes (POFF) und/oder des geschätzten Frequenzversatzes (FOFF) zu initialisieren, und
- der Symbolsynchronisierer (40) eingerichtet ist, ein durch den Sender (10) erzeugtes zweites Signal (S2) zu empfangen, um auf Basis des zweiten Signals (S2) ein Ausgangssignal (SO) zu erzeugen, welches mit dem Symboltakt des Empfängers (20) synchronisierte Symbole repräsentiert, die innerhalb des zweiten Signals (S2) übertragen werden.

2. Vorrichtung nach Anspruch 1, wobei
- die Schätzkomponente (30) eine vorwärtsgekoppelte Schätzkomponente (30) ist, und/oder
- eine Verarbeitungsdauer zum Schätzen des Phasenversatzes (POFF) und/oder des Frequenzversatzes (FOFF) kürzer ist als eine Einschwingzeit des Symbolsynchronisierers (40) bis zum Erreichen eines synchronisierten Symboltaktes zwischen dem Sender (10) und dem Empfänger (20) in einem Fall, in dem der Symbolsynchronisierer (40) nicht mittels der Schätzkomponente (30) initialisiert wird.

3. Vorrichtung (5) nach einem der vorstehenden Ansprüche, wobei
- das erste Signal (S1) ein vordefiniertes Synchronisationssignal ist, und/oder
- eine Symbolrate des ersten Signals gleich oder kleiner als eine für die Übertragung des ersten Signals (S1) und des zweiten Signals (S2) vorgesehene Trägerfrequenz ist.

4. Vorrichtung (5) nach einem der vorstehenden Ansprüche, wobei die Schätzkomponente (30) eingerichtet ist, den Phasenversatz (POFF) zu schätzen, indem
- das erste Signal (S1) repräsentierende Abtastwerte mittels einer IQ-Demodulation (50), deren Referenzfrequenz mit dem Symboltakt des Empfängers (20) korrespondiert, in komplexe Abtastwerte (60) umgewandelt werden,
- zu jedem der komplexen Abtastwerte (60) ein jeweils korrespondierender Phasenversatzwert (POFF) ermittelt wird, und
- aus den jeweiligen ermittelten Phasenversatzwerten (POFF) mit den Phasenversatzwerten (POFF) korrespondierende zeitliche Verschiebungswerte zwischen dem Symboltakt des Senders (10) und dem Symboltakt des Empfängers (20) ermittelt werden.

5. Vorrichtung (5) nach einem der vorstehenden Ansprüche, wobei die Schätzkomponente (30) eingerichtet ist, den Frequenzversatz (FOFF) zu schätzen, indem
- das erste Signal (S1) repräsentierende Abtastwerte mittels einer IQ-Demodulation (50), deren Referenzfrequenz mit dem Symboltakt des Empfängers (20) korrespondiert, in komplexe Abtastwerte (60) umgewandelt werden,
- zu jedem der komplexen Abtastwerte (60) ein jeweils korrespondierender Phasenversatzwert (POFF) ermittelt wird,
- überlaufbedingte Sprünge zwischen aufeinanderfolgenden Phasenversatzwerten (POFF) vermieden werden, indem die Phasenversatzwerte (POFF) in einen kontinuierlich fortgesetzten Verlauf von Phasenversatzwerten (POFF) umgerechnet werden, und
- Änderungen zwischen aufeinanderfolgenden umgerechneten Phasenversatzwerten (POFF) berechnet werden, welche einen jeweiligen Frequenzversatz (FOFF) repräsentieren.

6. Vorrichtung (5) nach einem der vorstehenden Ansprüche, wobei die Vorrichtung (5) eingerichtet ist, in Abhängigkeit
- eines Empfangszeitpunktes des ersten Signals (S1), und/oder
- einer Dauer des ersten Signals (S1), und/oder
- einer Verarbeitungsdauer für die Schätzung des Phasenversatzes (POFF) und/oder des Frequenzversatzes (FOFF), und/oder
- einer Anforderung an eine Mindestgenauigkeit für den geschätzten Phasenversatz (POFF) und/oder Frequenzversatz (FOFF)
einen Zeitpunkt (TS) zu ermitteln, zu dem ein aktuell in der Schätzkomponente (30) ermittelter Schätzwert für den Phasenversatz (POFF) und/oder den Frequenzversatz (FOFF) für eine Initialisierung des Symbolsynchronisierers (40) ausgewählt wird.

7. Vorrichtung (5) nach einem der vorstehenden Ansprüche, wobei die Schätzkomponente (30) zusätzlich wenigstens ein Filter (80) aufweist, welches eingerichtet ist, ein im ersten Signal (S1) enthaltenes Rauschen zu reduzieren.

8. Übertragungssystem aufweisend:
- einen Sender (10), und
- einen Empfänger (20) aufweisend eine Vorrichtung (5) nach einem der vorstehenden Ansprüche,
wobei
- der Sender (10) eingerichtet ist, das erste Signal (S1) und das zweite Signal (S2) auf Basis eines Symboltakes des Senders (10) zu erzeugen und die Signale (S1, S2) an den Empfänger (20) zu übertragen, und
- der Empfänger (20) eingerichtet ist, auf Basis des ersten Signals (S1) und des zweiten Signals (S2) Daten repräsentierende Symbole von dem Sender (10) zu empfangen.

9. Übertragungssystem nach Anspruch 9, wobei
- das Übertragungssystem wenigstens zwei Sender (10, 10`) aufweist, welche jeweils eingerichtet sind, zumindest das erste Signal (S1) und jeweilige zweite Signale (S2, S2') zu erzeugen und diese in nicht kollidierender Weise an den Empfänger (20) zu übertragen, und
- der Empfänger (20) eingerichtet ist, auf Basis der jeweiligen ersten Signale (S1) und zweiten Signale (S2, S2') Daten repräsentierende Symbole von den jeweiligen Sendern (10) zu empfangen.

10. Übertragungssystem nach Anspruch 8 oder 9, wobei das Übertragungssystem
- ein Ultraschallsystem, und/oder
- ein Radarsystem, und/oder
- ein Fahrzeugsystem, und/oder
- ein Powerline-Übertragungssystem, und/oder
- ein Basisbandübertragungssystem
ist.
